# EUROPÄISCHE PATENTSCHRIFT

(11) **EP 0 470 981 B1**
(45) Veröffentlichungstag und Bekanntmachung des Hinweises auf die Patenterteilung: **01.09.1993**
(21) Anmeldenummer: 90906856.1
(22) Anmeldetag: 02.05.1990
(51) Int. Cl.: B01F 5/00, B01F 3/02

(54) **MISCHVORRICHTUNG FÜR FLUIDE**
MIXING DEVICE FOR FLUIDS
DISPOSITIF DE MELANGE POUR FLUIDES

(30) Priorität: 03.05.1989 WO PCT/EP89/00486
(43) Veröffentlichungstag der Anmeldung: 19.02.1992
(73) Patentinhaber: SIEMENS AKTIENGESELLSCHAFT, 80333 München (DE)
(72) Erfinder: ULLRICH, Manfred, D-5060 Bergisch Gladbach 1 (DE); DAMM, Gunter, D-5000 Köln 80 (DE); WEHRLEIN, Ralf, D-4630 Bochum 1 (DE)
(86) Internationale Anmeldenummer: DE9000315
(87) Internationale Veröffentlichungsnummer: WO9013356

(56) Entgegenhaltungen:
- WO-A-88/06493
- DE-A- 3 108 875
- DE-B- 1 071 056
- FR-A- 2 382 264
- GB-A- 1 183 355
- GB-A- 1 520 482
- GB-A- 2 986 749

## Beschreibung

Die vorliegende Erfindung betrifft eine Mischvorrichtung für mehrere turbulent strömende Fluidströme von unterschiedlicher Temperatur und/oder Zusammensetzung mit einer Mischkammer von vorgegebenem Querschnitt und mit gerader oder gekrümmter Mittellinie und mit einer Auslaßöffnung für den Austritt eines gemischten Fluidstromes.

Diese Mischvorrichtung ist von besonderem Interesse für große Durchsatzmengen bei geringem Druckverlust, beispielsweise mit gerader Mittellinie für Heizungs- oder Klimaanlagen oder mit kreisförmiger Mittellinie für einen gasgekühlten Hochtemperatur-Kernreaktor, der von oben nach unten von Helium durchströmt wird. Bei diesen Hochtemperatur-Kernreaktoren, deren Kernbehälter aus Graphitblöcken aufgebaut ist, und die eine mittlere Gasaustrittstemperatur von ca. 950 °C haben, dürfen die örtlich maximal möglichen Gastemperaturen nur wenig über diesem Mittelwert liegen, weil die Temperaturbeständigkeit der anschließenden metallischen Bauteile auf ca. 1000 °C begrenzt ist. Außerdem führen wechselnde Temperaturen zu einer zusätzlichen Beanspruchung von Bauteilen, die mit Rücksicht auf die Lebensdauer dieser Bauteile möglichst gering sein soll. Daher ist man bestrebt, diese Reaktoren mit zeitlich und örtlich möglichst geringen Temperaturdifferenzen zu betreiben.

In der GB-PS 1 183 355 wird eine Vorrichtung zum Stoff- und Wärmeaustausch zwischen festen oder flüssigen Teilchen und Gasen beschrieben mit einer rotationssymmetrischen Wirbelkammer. Diese hat mehrere, in Längsrichtung der Wirbelkammer versetzte Einlaßkanäle, die in der Wirbelkammer aufgrund ihrer tangentialen Einströmung eine Drehströmung anregen mit freischwebend rotierenden Partikelringen. Das von Partikeln gereinigte Gas verläßt die Wirbelkammer über einen Auslaß, während die Partikel selbst über einen anderen Auslaß abgeführt werden. Eine Mischung mehrerer Fluidströme ist nicht Aufgabe dieser Vorrichtung.

In der DE-PS 25 06 293 wird ein gasgekühlter Hochtemperatur-Kernreaktor beschrieben, bei dem eine direkte Neutroneneinstrahlung aus dem Heißgassammelraum in die Heißgasleitungen und damit eine Aktivierung der metallischen Einbauten dieser Leitungen verhindert wird. Dies wird dadurch erreicht, daß in dem Heißgassammelraum über seine ganze Höhe eine Neutronenabschirmung in Form einer Ringmauer vorgesehen ist, die koaxial zu der Reaktorkaverne und mit einem solchen Abstand zu ihr angeordnet ist, daß der entstandene Ringraum für die Kühlgasströmung ausreichend dimensioniert ist und die Ringmauer mehrere Reihen von Schlitzen für den Kühlgasdurchtritt aufweist, die zu den Kühlgasaustrittsstutzen versetzt angeordnet sind. Ein weiterer Vorteil dieser Anordnung wird darin gesehen, daß durch Anordnung der Ringmauer und der vornehmlich radial verlaufenden Schlitze eine Zwangsführung des heißen Kühlgases erreicht wird, die eine Verbesserung der Temperaturverteilung an den Kühlgasaustrittsstutzen zur Folge hat.

In der DE-PS 27 42 847, die ebenfalls einen gasgekühlten Hochtemperatur-Kernreaktor betrifft, wird die bessere Durchmischung des heißen Kühlgases vor seinem Eintritt in die Heißgaskanäle durch hohe Säulen gelöst, die in mehreren auf ihre ganze Länge verteilten Ebenen radiale Bohrungen aufweisen, durch die der Säuleninnenraum mit dem Heißgassammelraum verbunden ist. Da das heiße Gas gleichmäßig in allen Ebenen des Heißgassammelraumes abströmen kann, wird die Herausbildung von Schichtungen in der Strömung vermieden und eine gute Durchmischung des aus verschiedenen Kernbereichen kommenden heißen Gases erzielt. Von einem Ringraum gemäß der vorher beschriebenen Konstruktion wird hier wieder abgesehen.

In der DE-OS 37 07 379 wird ebenfalls für einen gasgekühlten Hochtemperatur-Kernreaktor das Entstehen von Heißgassträhnen unterschiedlicher Temperatur in einem Heißgassammelraum verhindert durch zwei in den Heißgassammelraum hineinragende senkrechte Stauwände. Ein Ringraum mit zahlreichen Schlitzen ist hier ebenfalls nicht vorgesehen.

Turbulent im Sinne der vorliegenden Erfindung sind Fluidströme, die sicher nicht laminar strömen, also eine Reynolds-Zahl von mehr als 5000 haben, bezogen auf den hydraulischen Durchmesser der Mischkammer. Die Reynolds-Zahl Re ist dimensionslos und stellt bei Fluiden das Verhältnis der Trägheitskräfte zu den Zähigkeitskräften dar. Der hydraulische Durchmesser eines beliebigen Querschnitts ist gleich dem Durchmesser eines Kreises von gleicher Fläche.

Als Mittellinie der Mischkammer im Sinne der vorliegenden Erfindung wird definiert eine Linie, die die jeweiligen Flächenschwerpunkte der Mischkammerquerschnitte verbindet. Sie kann gerade oder gekrümmt sein. Als Querschnittsebene der Mischkammer wird definiert eine Ebene, die von der Mittellinie jeweils lotrecht durchdrungen wird. Als tangential wird eine Strömung definiert, die in den in der Mischkammer entstehenden Wirbel an seinem Umfang in Drehrichtung des Wirbels eindringt. "Radial" soll nur auf die gekrümmte Mittellinie bezogen sein.

Aufgabe der vorliegenden Erfindung ist die Angabe einer Mischvorrichtung für mehrere turbulent strömende Fluidströme von unterschiedlicher Temperatur und/oder Zusammensetzung mit einer Mischkammer von vorgegebenem Querschnitt mit gerader bzw. gekrümmter Mittellinie und mit einer Auslaßöffnung für den Austritt eines gemischten Fluidstromes. Spezielle Aufgabe dieser Erfindung ist die Angabe einer Mischvorrichtung für einen gasgekühlten Hochtemperatur-Kernreaktor mit radial und/oder azimutal unterschiedlicher Wärmefreisetzung im Kern. Damit sollen heiße und kalte Gassträhnen in der anschließenden Abflußleitung, die zu einem oder mehreren Wärmetauschern führt, vermieden werden. Auch solche Gassträhnen, die aus unvermeidlichen Spalten zwischen Graphitblöcken eines Hochtemperatur-Kernreaktors austreten oder zur Kühlung von Reflektorstäben oder der Brennelementschüttung in einem Kugelabzugsrohr notwendig sind, sollen mit dem Hauptgasstrom innig vermischt werden, so daß die danach durchströmten Bauteile nicht gefährdet werden.

Zur Lösung der erstgenannten Aufgabe wird zunächst eine Mischvorrichtung für mehrere turbulent strömende Fluidströme von unterschiedlicher Temperatur und/oder Zusammensetzung vorgeschlagen mit einer Mischkammer von nicht kreisrundem Querschnitt und mit gerader Mittellinie, mit mehreren einkanaligen und parallelen Umlenkstücken, die neben der Mischkammer in Richtung der Mittellinie versetzt angeordnet sind, in die jeweils ein Fluidstrom im Winkel zur Mittellinie und seitlich versetzt einströmbar und tangential in die Mischkammer umlenkbar ist, und mit einer an der Mischkammer vorhandenen Auslaßöffnung für den Austritt eines gemischten Fluidstromes.

Zur Lösung der erstgenannten Aufgabe wird außerdem eine Mischvorrichtung für mehrere turbulent strömende Fluidströme von unterschiedlicher Temperatur und/oder Zusammensetzung vorgeschlagen mit einer Mischkammer von vorgegebenem Querschnitt und mit gekrümmter Mittellinie, mit mehreren einkanaligen und radialen Umlenkstücken, die neben der Mischkammer in Richtung der Mittellinie versetzt angeordnet sind, in die ein oder mehrere Fluidströme im Winkel zur Mittellinie und seitlich versetzt einströmbar und tangential in die Mischkammer umlenkbar sind, und mit einer an der Mischkammer vorhandenen Auslaßöffnung für den Austritt eines gemischten Fluidstromes.

Mit diesen Anordnungen entsteht in der Mischkammer ein makroskopischer Wirbel von vorgegebener Drehrichtung, der sich wendelförmig zur Auslaßöffnung hin bewegt, dabei für eine gute Mischung der aus den folgenden Umlenkstücken eintretenden Fluidströme sorgt und durch die kinetische Energie der in Richtung der Mittellinie versetzt ankommenden Fluidströme in Rotation gehalten wird. Durch die Umlenkung neben der Mischkammer, also unmittelbar vor dem Eintritt in die Mischkammer, werden die Fluidströme bevorzugt in die gewünschte tangentiale Richtung gelenkt. Die Umlenkstücke haben vorzugsweise einen rechteckigen Kanalquerschnitt.

Die in Querschnittsebene der Mischkammer gebogene, vorzugsweise kreisförmig gebogene Wand der Umlenkstücke dient ebenfalls der gewünschten tangentialen Einströmung und verringert den Druckverlust im Umlenkstück im Vergleich zu einer rechtwinkligen Umlenkung.

Wenn die Mischkammer auf ihrer ganzen Höhe mit den Umlenkstücken verbunden ist, wird ebenfalls der Druckverlust verringert und bei gebogener Wand die tangentiale Einströmung begünstigt.

Auch eine teilweise Durchdringung von Umlenkstücken und Mischkammer bereits vor der Umlenkung fördert die Entstehung und Erhaltung des gewünschten makroskopischen Wirbels. Allerdings sollte diese Durchdringung nur im Randbereich der Mischkammer vorhanden sein, damit die Fluidströme auch dort annähernd tangential zum Wirbel eintreten.

Der erfindungsgemäße rechteckige Querschnitt der Mischkammer ist nicht nur wegen der leichteren Herstellung großer Mischvorrichtungen von Interesse sondern hat auch erhebliche Vorteile für die Durchmischung der Fluidströme. In einer üblichen kreisrunden Mischkammer nach dem Stande der Technik könnten sich einzelne Gassträhnen ungestört wendelförmig fortbewegen. In einer Mischkammer von rechteckigem Querschnitt mit tangentialer Einströmung wird jedoch der darin rotierende Wirbel in den Ecken ständig gestört und gebremst, aber durch die versetzt eintretenden Fluidströme mit kinetischer Energie versorgt und in Rotation gehalten. Andere Querschnittsformen, beispielsweise mehreckige, abgerundete oder ovale sind prinzipiell auch möglich. Ein kreisrunder Querschnitt wird allerdings weniger verwirbelt.

Eine Mischvorrichtung mit kreisförmiger oder teilkreisförmiger Mittellinie und mit einem stern- oder teilsternförmigen Verteiler, der die auf einem Ring oder Teilring bzw. einem Kreis oder Teilkreis zusammengeführt ankommenden Fluidströme auf radiale Umlenkstücke aufteilt, ist gegenüber der geraden Mischkammer vorteilhaft, weil die Mischvorrichtung in diesem Fall mit relativ geringem Bedarf an Grundfläche gebaut werden kann.

Mit einer Erweiterung der Umlenkstücke in radialer Richtung nach außen wird berücksichtigt, daß der Durchsatz der auf einer Kreis- oder Teilkreisfläche ankommenden Fluidströme von innen nach außen zunimmt.

Zur Lösung der speziellen Aufgabe dieser Erfindung für einen gasgekühlten Hochtemperatur-Kernreaktor wird dieser zunächst beschrieben. Er hat eine waagerechte, ringförmige Mischkammer unterhalb seines Kerns mit radial angeordneten Sektoren und mit einer radialen Auslaßöffnung. Der Kern eines Hochtemperatur-Kernreaktors wird vorzugsweise aus kugelförmigen Brennelementen, aber auch aus blockförmigen Brennelementen gebildet, er wird in beiden Fällen von einem Behälter umfaßt, der in der Nähe des Kerns aus gestapelten Graphitblöcken besteht, die weiter außen mit Kohlestein isoliert, gekühlt und von einem Stahlbehälter zusammengehalten sind. Soweit der Kern des Reaktors aus kugelförmigen Brennelementen besteht, hat der Kernbehälter einen trichterförmigen Boden, der von zahlreichen senkrechten Gaskanälen durchsetzt ist und in einem kreisförmigen Kugelabzugskanal endet. Behälter und Boden bestehen aus übereinander gestapelten Graphitblöcken, zwischen denen Spalten zwangsläufig vorhanden oder sogar ganz bewußt vorgesehen sind, um beispielsweise die im Kugelabzugskanal vorhandenen Brennelemente oder in Blöcken des Behälters vorhandene Absorberstäbe zu kühlen.

In spezieller Ausgestaltung der Erfindung für einen gasgekühlten Hochtemperatur-Kernreaktor wird vorgeschlagen, daß oberhalb eines Teils der Sektoren zahlreiche senkrechte Kanäle vorhanden sind, die an ihrem oberen Ende mit waagerechten Ringkanälen verbunden sind, und daß in einem Teil der Sektoren in der Nähe der Auslaßöffnung keine radialen Umlenkstücke, aber zahlreiche senkrechte Bohrungen zur Aufnahme von Absorbermaterial vorhanden sind. Damit man außerhalb des Reaktors eine über seinen Umfang annähernd gleichmäßige Abschirmung gegen radioaktive Strahlen vorsehen kann, ist es im Bereich der Auslaßöffnung wünschenswert, die an dieser Stelle fehlende Abschirmung durch ein sehr wirksames Absorbermaterial, beispielsweise Borcarbid, in den benachbarten Graphitblöcken zu ersetzen. Weiterhin ist es aus mischungstechnischen Gründen sinnvoll, im Bereich der Auslaßöffnung einige der radialen Umlenkstücke in den Graphitblöcken wegzulassen, damit von dort keine heißen oder kalten Gassträhnen ohne ausreichende Durchmischung in die anschließende Abflußleitung gelangen. Damit nun die im Bereich der fehlenden Umlenkstücke ankommenden Gasströme einen Weg zur Abflußleitung finden, sind die oberhalb der Umlenkstücke vorhandenen senkrechten Kanäle an ihren oberen Enden mit waagerechten Ringkanälen verbunden, durch die diese Gasströme zu anderen Umlenkstücken fließen können.

Weiterhin wird vorgeschlagen, daß ein Sektor mehrere Umlenkstücke bildet, d. h., daß z. B. jeweils zwei radiale Leitwände zwischen den radialen Umlenkstücken von einem einzigen sektorförmigen Graphitblock gebildet sind. Mit dieser Ausgestaltung werden Bauteile geschaffen, die von ihrer Größe her noch herstellbar und transportabel sind und die bei einem sinnvollen Verhältnis von Breite zu Höhe noch übereinander stapelbar sind, ohne umzukippen. Diese Blöcke bilden mit den darunter bzw. darüber angeordneten Blöcken voneinander unabhängige Säulen mit Spalten dazwischen, so daß Differenzdehnungen benachbarter Säulen in vertikaler Richtung behindert werden.

In weiterer Ausgestaltung der Erfindung für einen gasgekühlten Hochtemperatur-Kernreaktor nach dem Kugelhaufenprinzip mit einem zentralen Kugelabzugskanal wird vorgeschlagen, daß dieser Kugelabzugskanal aus den Sektoren, d. h. den gestapelten Graphitblöcken, gebildet ist. Damit wird ein besonderes, in sich geschlossenes Kugelabzugsrohr vermieden. Die zwischen den Blöcken vorhandenen Spalten sorgen aufgrund der bei Betrieb eines solchen Reaktors vorhandenen Druckunterschiede für einen ständigen Gasstrom, der die im Kugelabzugskanal vorhandenen Brennelementkugeln ausreichend kühlt. Aufgrund der anschließenden guten Durchmischung gemäß der vorliegenden Erfindung können diese Gasströme toleriert werden.

In weiterer Ausgestaltung der Erfindung haben die Graphitblöcke in der Nähe des Kugelabzugskanals senkrechte Bohrungen zur Aufnahme von Absorbermaterial, so daß eine Leistungsproduktion in den hochgradig radioaktiven Brennelementen im Kugelabzugskanal verringert werden kann.

Die Figuren 1 bis 5 zeigen verschiedene Ausführungsbeispiele der Erfindung.
Figur 1 zeigt perspektivisch eine Mischvorrichtung mit gerader Mittellinie und mit drei Umlenkstücken als Einlaß für Fluidströme.
Figur 2 zeigt einen senkrechten, perspektivisch ergänzten Radialschnitt durch eine Mischvorrichtung mit kreisförmig gekrümmter Mittellinie.
Figur 3 zeigt perspektivisch einen Teil einer kreisförmigen Mischvorrichtung.
Figur 4 zeigt einen waagerechten Schnitt durch eine Mischvorrichtung für einen gasgekühlten Hochtemperatur-Kernreaktor nach dem Kugelhaufenprinzip.
Figur 5 zeigt einen senkrechten Schnitt durch die Mischvorrichtung von Figur 4.

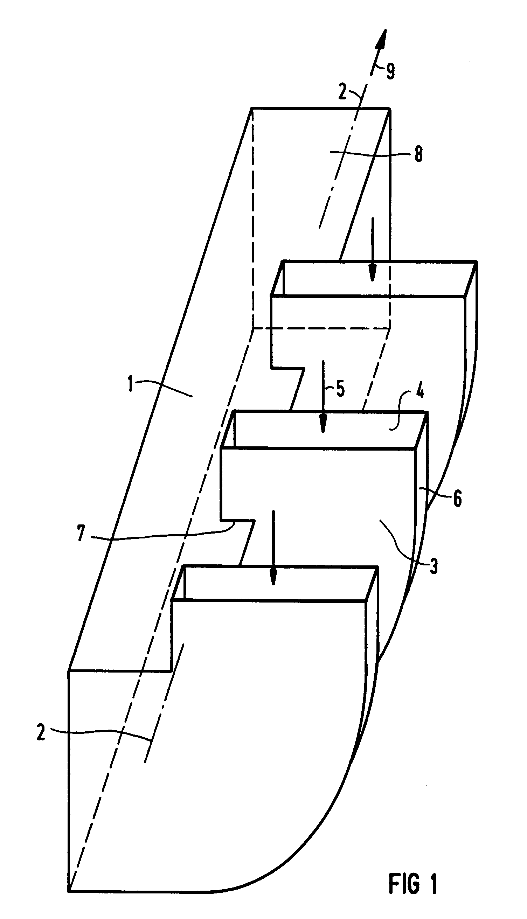

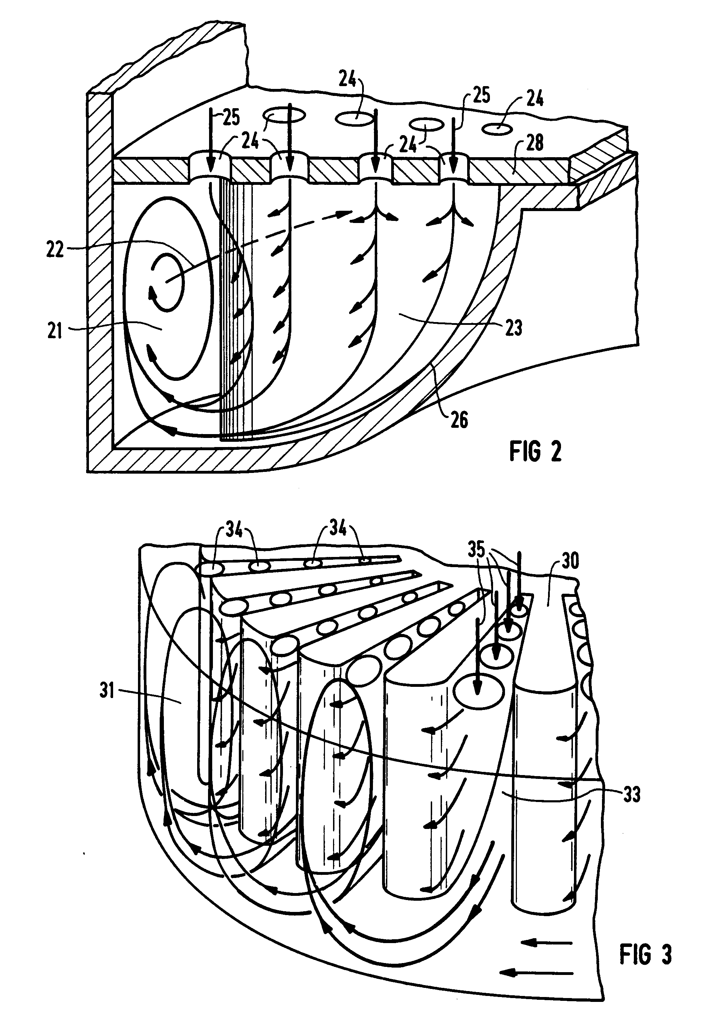

In Figur 1 hat eine am unteren Ende der Figur geschlossene und am oberen Ende offene Mischkammer 1 einen rechteckigen Querschnitt und eine gerade Mittellinie 2. Auf ihrer rechten Seite sind Umlenkstücke 3 auf der ganzen Höhe der Mischkammer 1 angeschlossen, die die senkrecht von oben durch rechteckige Öffnungen 4 eintretenden Fluidströme 5 von auch in sich unterschiedlicher Temperatur und/oder Zusammensetzung mit in diesem Fall viertelkreisförmigen Umlenkwänden 6 in die Mischkammer 1 umlenken und dabei einen überwiegenden Teil der Fluidströme 5 mit unverminderter Geschwindigkeit in den unteren Teil der Mischkammer 1 leiten. Auf diese Weise wird in der Mischkammer 1 ohne besondere Leitvorrichtungen ein makroskopischer Wirbel erzeugt, der zwar in den Ecken des rechteckigen Querschnitts der Mischkammer 1 ständig gebremst aber durch die die in Bezug auf diesen Wirbel tangentiale Einströmung aus mehreren, in Längsrichtung der Mischkammer versetzt angeordneten Umlenkstücken 3 in Rotation gehalten wird. Auch die Durchdringungen der senkrechten Begrenzungen der Umlenkstücke 3 mit der Mischkammer 1 bei 7 leiten Fluidströme tangential zum Wirbel in die Mischkammer 1 ein. Dies ist in Figur 2 deutlicher zu erkennen. Am oberen Ende der Figur 1 soll die Mischkammer 1, um eine gute Durchmischung zu erzielen, noch wesentlich länger sein als gezeichnet. Sie hat am Ende eine rechteckige Auslaßöffnung 8 für den Austritt des gemischten Fluidstromes 9.

In Figur 2 hat die Mischkammer 21 eine gekrümmte Mittellinie 22 und ist über ihre ganze Höhe mit einem von mehreren radialen Umlenkstücken 23 verbunden. Durch die senkrechten Öffnungen 24 strömen Fluidströme 25 durch die Decke 28 und werden gemeinsam durch die viertelkreisförmig gebogenen Wände 26 umgelenkt und bevorzugt in den unteren Teil der Mischkammer 21 geleitet. Darin entsteht, wie bei Figur 1 bereits beschrieben, ein makroskopischer Wirbel, der sich in diesem Fall entsprechend der gekrümmten Mittellinie 22 zu einer in diesem Fall nicht dargestellten Auslaßöffnung hin bewegt.

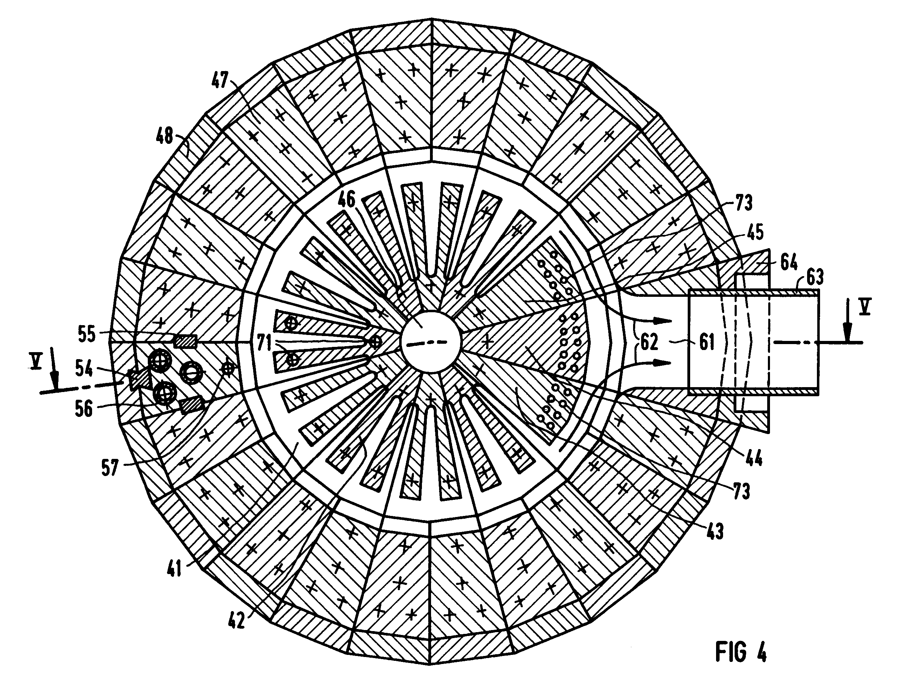

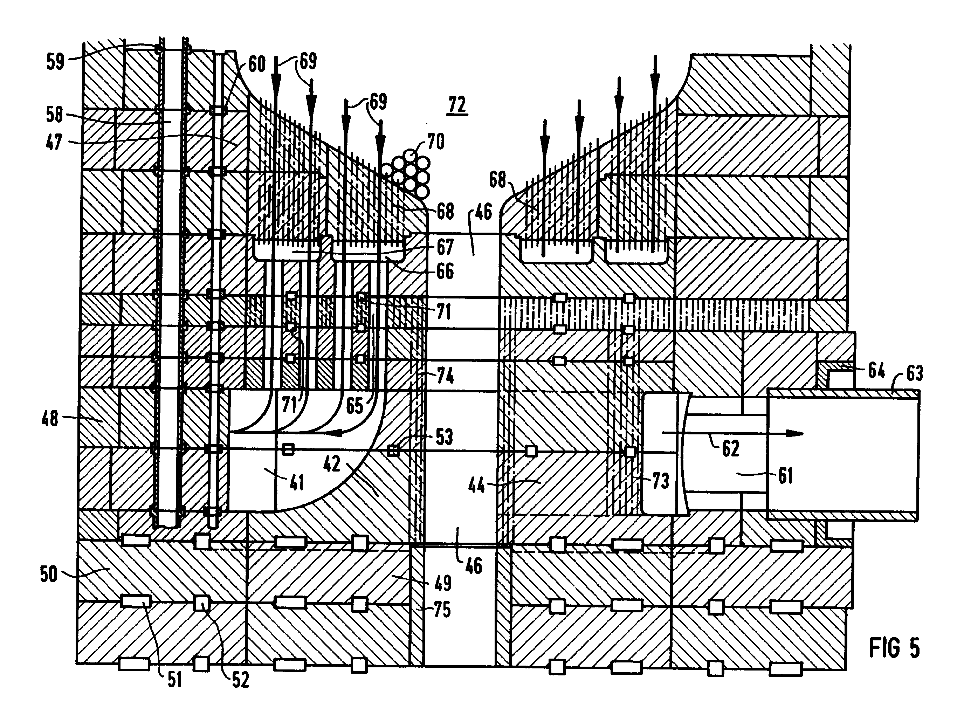

Figur 3 zeigt eine Mischvorrichtung wie in Figur 2, wobei aber durch Weglassen von Decke und Außenwand einer Mischkammer 31 ein Teil eines sternförmigen Verteilers 30 sichtbar wird, der die durch die angedeuteten Öffnungen 34 eintretenden Fluidströme 35 durch radiale Umlenkstücke 33 in die Mischkammer 31 leitet. Auch hier entsteht, wie bei den Figuren 1 und 2 bereits beschrieben, ein makroskopischer Wirbel in der Mischkammer 31, der durch die überwiegend tangentialen Einströmungen aus den hier in Umfangsrichtung der Mischkammer 31 versetzten Umlenkstücken 33 in Rotation gehalten wird. Ein Auslaß für den Austritt des gemischten Fluidstromes ist auch hier nicht dargestellt. Er kann aber wie in den folgenden Figuren 4 und 5 radial nach außen an der Mischkammer vorgesehen werden.

Die Figuren 4 und 5 zeigen einen Anwendungsfall der vorliegenden Erfindung als Mischvorrichtung für einen gasgekühlten Kernreaktor nach dem Kugelhaufenprinzip. In beiden Figuren werden gleiche Ziffern verwendet. Die kreisförmige Mischkammer 41 mit rechteckigem Querschnitt umgibt einen aus zwölf Sektoren 42 bis 45 bestehenden Verteiler, wobei neun gleichartige Sektoren 42 mit und drei Sektoren 43, 44 und 45 ohne Umlenkstücke vorhanden sind. Die Sektoren 42 haben strömungstechnisch die Funktion der Umlenkstücke 23 unf 33. Diese zwölf Sektoren bilden in der Mitte einen Kugelabzugskanal 46. Nach außen wird die Mischkammer 41 begrenzt durch zweiundzwanzig sektorförmige Graphitblöcke 47, die nach außen durch Kohlesteinblöcke 48 isoliert sind. Sie ruhen mit den Sektoren 42, 43, 44 und 45 und der Auslaßöffnung 61 auf vierundzwanzig ebenfalls sektorförmigen Graphitblöcken 49 und 50 und sind sowohl mit diesen als auch untereinander durch verschiedene Graphitklötze 51, 52, 53, 54, 55 verbunden. Weiterhin wird ein Teil der Graphitblöcke 47 von senkrechten Bohrungen 56 und 57 durchdrungen, die zur Kühlung und/oder zur Aufnahme von Absorberstäben und Absorberkugeln benutzt werden. Sie enthalten Graphithülsen 58 und Dichtringe 59 und 60, was aber für die vorliegende Erfindung nicht von Bedeutung ist. In der jeweils rechten Hälfte der Figuren 4 und 5 mündet die Mischkammer 41 in einer Auslaßöffnung 61 für den austretenden gemischten Gasstrom 62. In diesem Bereich werden die sektorförmigen Graphitblöcke 47 und Kohlesteinblöcke 48 von einem Auslaßstutzen 63 bzw. einem Ring 64 durchdrungen. Oberhalb von Mischkammer 1 und Umlenksektoren 42 sind zahlreiche senkrechte Kanäle 65 vorhanden, aber nicht im Bereich der Auslaßöffnung 61. Diese Kanäle 65 sind weiter oben mit zwei Ringräumen 66 und 67 verbunden, damit die über den Reaktorquerschnitt durch die zahlreichen Öffnungen 68 ankommenden Gasströme 69 einen Weg über die anderen Kanäle 65 zur Mischkammer 1 hin finden. Die kugelförmigen Brennelemente 70 sind in Figur 5 nur an einer Stelle angedeutet. Tatsächlich bilden sie mit großer Anzahl den Kern 72, der im wesentlichen von den Graphitblöcken 47 umgeben wird. Die Brennelemente 70 füllen auch das Kugelabzugsrohr 46 und werden in nicht näher dargestellter Weise bei Bedarf nach unten abgezogen. Die Gasströme 69 fließen von oben nach unten zunächst durch zahlreiche kleine Öffnungen 68 in die beiden konzentrischen Ringräume 66 und 67. Von dort aus fließen sie durch zahlreiche senkrechte Kanäle 65, die aber nur oberhalb der Umlenksektoren 42 angeordnet sind, und werden dort, wie bei den vorhergehenden Figuren bereits beschrieben, in die Mischkammer 41 umgelenkt. Der darin entstehende rotierende Wirbel fließt in der oberen Hälfte der Figur 4 rechts herum und in der unteren Hälfte der Figur links herum und tritt als gemischter Gasstrom 62 durch die Auslaßöffnung 61 und den Auslaßstutzen 63 in eine nicht näher beschriebene Leitung zu einem nicht dargestellten Wärmetauscher ein. Durch die vorgesehene Anordnung von Sektoren 43, 44, 45 ohne Umlenkung in der Nähe der Auslaßöffnung 61 wird vermieden, daß eventuell nicht ausreichend gemischte Gasströme nach außen dringen können. Mit dem in die Bohrungen 73 einfüllbaren Absorbermaterial wird die insbesondere aus den hochradioaktiven Brennelementen 70 im Kugelabzugskanal 46 austretende radioaktive Strahlung, die im Bereich des Abzugskanals 61 nicht durch Graphitblöcke abgeschirmt werden kann, in diesem Bereich verringert. Wie nur in Figur 5 dargestellt, sind auch in unmittelbarer Nähe des Kugelabzugskanals 46 Bohrungen 74 angeordnet, die mit Absorbermaterial gefüllt werden können, um die radioaktive Strahlung schon an dieser Stelle zu verringern. Dies ist von besonderer Bedeutung in Höhe der Umlenksektoren 42, die ja aufgrund des dort fehlenden Graphitmaterials mehr radioaktive Strahlung nach außen dringen lassen. Innerhalb der Graphitblöcke 49 wird der Kugelabzugskanal 46 mit einem Kugelabzugsrohr 75 nach unten fortgesetzt.

## Patentansprüche

1. Mischvorrichtung für mehrere turbulent strömende Fluidströme (5) von unterschiedlicher Temperatur und/oder Zusammensetzung
a) mit einer Mischkammer (1) von nicht kreisrundem Querschnitt und mit gerader Mittellinie (2),
b) mit mehreren einkanaligen und parallelen Umlenkstücken (3), die neben der Mischkammer (1) in Richtung der Mittellinie (2) versetzt angeordnet sind, in die jeweils ein Fluidstrom (5) im Winkel zur Mittellinie (2) und seitlich versetzt einströmbar und tangential in die Mischkammer (1) umlenkbar ist,
c) mit einer an der Mischkammer (1) vorhandenen Auslaßöffnung (8) für den Austritt eines gemischten Fluidstromes (9).

2. Mischvorrichtung für mehrere turbulent strömende Fluidströme (25, 35) von unterschiedlicher Temperatur und/oder Zusammensetzung
a) mit einer Mischkammer (21, 31, 41) von vorgegebenem Querschnitt und mit gekrümmter Mittellinie (22),
b) mit mehreren einkanaligen und radialen Umlenkstücken (23, 33), die neben der Mischkammer (21, 31, 41) in Richtung der Mittellinie (22) versetzt angeordnet sind, in die ein oder mehrere Fluidströme (25, 35) im Winkel zur Mittellinie (22) und seitlich versetzt einströmbar und tangential in die Mischkammer (21, 31, 41) umlenkbar sind,
c) mit einer an der Mischkammer (21, 31, 41) vorhandenen Auslaßöffnung (61) für den Austritt eines gemischten Fluidstromes (62).

3. Mischvorrichtung nach Anspruch 1 oder 2, **dadurch gekennzeichnet,** daß die Umlenkstücke (3, 23, 33) eine in einer Querschnittsebene der Mischkammer (1, 21, 31, 41) gebogene Wand (6, 26) haben.

4. Mischvorrichtung nach Anspruch 3, **dadurch gekennzeichnet,** daß die Mischkammer (1, 21, 31, 41) auf ihrer ganzen Höhe mit den Umlenkstücken (3, 23, 33) verbunden ist.

5. Mischvorrichtung nach den Ansprüchen 1 oder 3, **dadurch** **gekennzeichnet,** daß bei waagerechter Mischkammer (1) die senkrechten Begrenzungen der Umlenkstücke (3) die Mischkammer (1) oben bei (7) teilweise durchdringen.

6. Mischvorrichtung nach den Ansprüchen 2 oder 3, **dadurch** **gekennzeichnet,** daß bei waagerechter Mischkammer (21) die äußeren senkrechten Öffnungen (24) die Decke (28) oberhalb der Mischkammer 21 teilweise durchdringen.

7. Mischvorrichtung nach den Ansprüchen 1, 3, 4, 5 oder 6, **dadurch** **gekennzeichnet,** daß die Mischkammer (1, 21, 31, 41) einen rechteckigen Querschnitt hat.

8. Mischvorrichtung nach Anspruch 2, 3 oder 4 mit gekrümmter Mittellinie (22), **dadurch** **gekennzeichnet,** daß ein stern- oder teilsternförmiger Verteiler (30) vorhanden ist, der die Fluidströme (34) auf zahlreiche radiale Umlenkstücke (33) aufteilt.

9. Mischvorrichtung nach einem oder mehreren der vorhergehenden Ansprüche mit gekrümmter Mittellinie (22), **dadurch** **gekennzeichnet,** daß die Umlenkstücke (23, 33) in radialer Richtung nach außen erweitert sind.

10. Mischvorrichtung nach einem oder mehreren der vorhergehenden Ansprüche für einen gasgekühlten Hochtemperatur-Kernreaktor mit kreisförmigem Grundriss, einer waagerechten, ringförmigen Mischkammer (41), mehreren Sektoren (42 bis 45) und mit einer Auslaßöffnung (61), **dadurch** **gekennzeichnet,** daß oberhalb der Sektoren (42) zahlreiche senkrechte Kanäle (65) vorhanden sind, die an ihrem oberen Ende mit waagerechten Ringkanälen (66, 67) verbunden sind, und daß in den Sektoren (43, 44, 45) in der Nähe der Auslaßöffnung (61) keine radialen Umlenkstücke aber zahlreiche Bohrungen (73) zur Aufnahme von Absorbermaterial vorhanden sind.

11. Mischvorrichtung nach Anspruch 10, **dadurch gekennzeichnet,** daß ein Sektor (42) mehrere Umlenkstücke (33) bildet.

12. Mischvorrichtung nach Anspruch 11, für einen Hochtemperatur-Kernreaktor nach dem Kugelhaufenprinzip mit einem zentralen Kugelabzugskanal (46), **dadurch gekennzeichnet,** daß der zentrale Kugelabzugskanal (46) aus den Sektoren (42, 43, 44, 45) gebildet ist.

13. Mischvorrichtung nach Anspruch 12, **dadurch gekennzeichnet,** daß die Sektoren (42, 43, 44, 45) in der Nähe des Kugelabzugkanals (46) senkrechte Bohrungen (74) zur Aufnahme von Absorbermaterial haben.

## Claims

1. Mixing device for a plurality of turbulently flowing fluid currents (5) of varying temperature and/or composition
a) with a mixing chamber (1) of non-circular cross section and with straight centre line (2),
b) with a plurality of single-duct and parallel guide pieces (3), which are staggered adjacent the mixing chamber (1) in the direction of the centre line (2), into which in each case a fluid current (5) can flow at an angle to the centre line (2), and laterally staggered, and can be guided tangentially into the mixing chamber (1),
c) with an outlet opening (8) present at the mixing chamber (1) for the issue of a mixed fluid current (9).

2. Mixing device for a plurality of turbulently flowing fluid currents (25, 35) of varying temperature and/or composition
a) with a mixing chamber (21, 31, 41) of specified cross section and with curved centre line (22),
b) with several single-duct and radial guide pieces (23, 33), which are staggered adjacent the mixing chamber (21, 31, 41) in the direction of the centre line (22), into which one or more fluid currents (25, 35) can flow at an angle to the centre line (22), and laterally staggered, and can be guided tangentially into the mixing chamber (21, 31, 41),
c) with an outlet opening (61) present at the mixing chamber (21, 31, 41) for the issue of a mixed fluid current (62).

3. Mixing device according to claim 1 or 2, characterized in that the guide pieces (3, 23, 33) have a wall (6, 26) bent in a cross-sectional plane of the mixing chamber (1, 21, 31, 41).

4. Mixing device according to claim 3, characterized in that the mixing chamber (1, 21, 31, 41) is connected along its entire height to the guide pieces (3, 23, 33).

5. Mixing device according to claims 1 or 3, characterized in that with horizontal mixing chamber (1) the vertical limitations of the guide pieces (3) partially penetrate the mixing chamber (1) at the top at (7).

6. Mixing device according to claims 2 or 3, characterized in that with horizontal mixing chamber (21) the external vertical openings (24) partially penetrate the cover (28) above the mixing chamber 21.

7. Mixing device according to claims 1, 3, 4, 5 or 6, characterized in that the mixing chamber (1, 21, 31, 41) has a rectangular cross section.

8. Mixing device according to claim 2, 3 or 4 with curved centre line (22), characterized in that a star-shaped or partially star-shaped distributor (30) is present, which distributes the fluid currents (34) to numerous radial guide pieces (33).

9. Mixing device according to one or more of the preceding claims with curved centre line (22), characterized in that the guide pieces (23, 33) are widened towards the outside in the radial direction.

10. Mixing device according to one or more of the preceding claims for a gas-cooled high-temperature nuclear reactor with circular cross section, a horizontal, annular mixing chamber (41), several sectors (42 to 45) and with an outlet opening (61), characterized in that above the sectors (42) numerous vertical ducts (65) are present, which are connected at their upper end to horizontal annular ducts (66, 67), and in that in the sectors (43, 44, 45) in the vicinity of the outlet opening (61) there are no radial guide pieces, but numerous bores (73) for the incorporation of absorbent material.

11. Mixing device according to claim 10, characterized in that a sector (42) forms several guide pieces (33).

12. Mixing device according to claim 11, for a high-temperature nuclear reactor according to the pebble-bed principle with a central pebble-withdrawal duct (46), characterized in that the central pebble-withdrawal duct (46) is formed from the sectors (42, 43, 44, 45).

13. Mixing device according to claim 12, characterized in that the sectors (42, 43, 44, 45) in the vicinity of the pebble-withdrawal duct (46) have vertical bores (74) for the incorporation of absorbent material.

## Revendications

1. Dispositif de mélange de plusieurs courants de fluide (5) turbulents de température et/ou de compositions différentes, comprenant
a) une chambre de mélange (1) de section transversale non circulaire et de ligne médiane (2) rectiligne,
b) plusieurs pièces (3) de déviation à canal unique et parallèles, qui sont disposées à côté de la chambre de mélange (1) de manière décalée dans la direction de la ligne médiane (2) et dans chacune desquelles un courant de fluide (5) peut pénétrer, en faisant un angle avec la ligne médiane (2) et en étant décalé latéralement, et être dévié tangentiellement dans la chambre de mélange (1),
c) un orifice (8) de sortie présent sur la chambre de mélange (1) et destiné à la sortie d'un courant de fluide (9) mélangé.

2. Dispositif de mélange de plusieurs courants de fluide (25, 35) turbulents de température et/ou de compositions différentes, comprenant
a) une chambre de mélange (21, 31, 41) de section transversale prescrite et de ligne médiane (22) incurvée,
b) plusieurs pièces (23) de déviation à canal unique et parallèles, qui sont disposées à côté de la chambre de mélange (21, 31, 41) de manière décalée dans la direction de la ligne médiane (22) et dans chacune desquelles un courant de fluide (25, 35) peut pénétrer, en faisant un angle avec la ligne médiane (22) et en étant décalé latéralement, et être dévié tangentiellement dans la chambre de mélange (21, 31, 41),
c) un orifice (61) de sortie présent sur la chambre de mélange (21, 31, 41) et destiné à la sortie d'un courant de fluide (62) mélangé.

3. Dispositif de mélange suivant la revendication 1 ou 2, caractérisé en ce que les pièces de déviation (3, 23, 33) ont une paroi (6, 26) incurvée dans un plan de coupe transversale de la chambre de mélange (1, 21, 31, 41).

4. Dispositif de mélange suivant la revendication 3, caractérisé en ce que la chambre de mélange (1, 21, 31, 41) communique sur toute sa hauteur avec les pièces de déviation (3, 23, 33).

5. Dispositif de mélange suivant la revendication 1 ou 3, caractérisé en ce que, pour une chambre de mélange (1) horizontale, les démarcations verticales des pièces de déviation (3) traversent partiellement la chambre de mélange (1) en haut en (7).

6. Dispositif de mélange suivant la revendication 2 ou 3, caractérisé en ce que, pour une chambre de mélange (21) horizontale, les ouvertures (24) extérieures verticales traversent partiellement le couvercle (28) au-dessus de la chambre de mélange (21).

7. Dispositif de mélange suivant la revendication 1, 3, 4, 5 ou 6, caractérisé en ce que la chambre de mélange (1, 21, 31, 41) a une section transversale rectangulaire.

8. Dispositif de mélange suivant la revendication 2, 3 ou 4, à ligne médiane (22) incurvée, caractérisé en ce qu'il est prévu un répartiteur (30) en forme d'étoile ou en forme d'étoile partielle, qui subdivise les courants de fluide (34) entre un grand nombre de pièces de déviation (33) radiales.

9. Dispositif de mélange suivant l'une ou plusieurs des revendications précédentes à ligne médiane (22) incurvée, caractérisé en ce que les pièces de déviation (23, 33) s'élargissent vers l'extérieur en direction radiale.

10. Dispositif de mélange suivant l'une ou plusieurs des revendications précédentes pour un réacteur nucléaire à haute température à refroidissement par du gaz, ayant une chambre de mélange (41) annulaire horizontale dont la projection sur un plan horizontal est circulaire, plusieurs secteurs (42 à 45) et un orifice de sortie (61), caractérisé en ce qu'au-dessus des secteurs (42) sont prévus un grand nombre de canaux (65) verticaux qui communiquent, par leur extrémité supérieure, avec des canaux annulaires (66, 67) horizontaux et en ce que, dans les secteurs (43, 44, 45), il n'est pas prévu, à proximité de l'orifice de sortie (61), de pièces de déviation radiales, mais un grand nombre de trous (73) de réception de matière servant d'absorbant.

11. Dispositif de mélange suivant la revendication 10, caractérisé en ce qu'un secteur (42) forme plusieurs pièces de déviation (33).

12. Dispositif de mélange suivant la revendication 11, pour un réacteur nucléaire à haute température fonctionnant suivant le principe du lit de boulets, ayant un canal (46) central d'évacuation des boulets, caractérisé en ce que le canal (46) central d'évacuation des boulets est formé des secteurs (42, 43, 44, 45).

13. Dispositif de mélange suivant la revendication 12, caractérisé en ce que les secteurs (42, 43, 44, 45) ont, à proximité du canal (46) d'évacuation des boulets, des trous (74) verticaux de réception de matière servant d'absorbant.
